(19) Europäisches Patentamt / European Patent Office / Office européen des brevets

(11) **EP 4 435 638 A1**

(12) **EUROPÄISCHE PATENTANMELDUNG**

(43) Veröffentlichungstag:
**25.09.2024 Patentblatt 2024/39**

(21) Anmeldenummer: **24154901.3**

(22) Anmeldetag: **31.01.2024**

(51) Internationale Patentklassifikation (IPC):
**G06F 18/22** *(2023.01)* **G06V 10/82** *(2022.01)*
**G06V 20/59** *(2022.01)*

(52) Gemeinsame Patentklassifikation (CPC):
**G06F 18/22; G06V 10/82; G06V 20/59**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **22.03.2023 DE 102023202550**

(71) Anmelder: **Siemens Mobility GmbH**
**81739 München (DE)**

(72) Erfinder:
• **Sema, Albi**
**10629 Berlin (DE)**
• **Schüßler, Michael**
**12305 Berlin (DE)**

(74) Vertreter: **Siemens Patent Attorneys**
**Postfach 22 16 34**
**80506 München (DE)**

(54) **COMPUTERIMPLEMENTIERTES VERFAHREN ZUM ERKENNEN EINES ZUSTANDES EINES INNENRAUMES EINES ÖFFENTLICHEN VERKEHRSMITTELS**

(57) Die Erfindung betrifft eine Vorrichtung und ein computerimplementiertes Verfahren zum Erkennen eines Innenraumes eines öffentlichen Verkehrsmittels, der sich nicht in einem vorgegebenen Zustand befindet, wobei ein trainiertes neuronales Netz mit mehreren Schichten vorgesehen ist, wobei eine Schicht eine Merkmalskarte darstellt, wobei von einem aufgenommenen Bild des Innenraumes des öffentlichen Verkehrsmittels mithilfe der Schichten des trainierten neuronalen Netzes mehrere Merkmalskarten für das Bild erstellt werden, wobei eine Merkmalskarte Merkmale für Bildausschnitte des Bildes mit wenigstens einem oder mehreren Bildpixeln aufweist, wobei die Merkmale mehrerer Merkmalskarten mit Vergleichswerten verglichen werden, wobei bei einer vorgegebenen Abweichung der Merkmale von den Vergleichswerten erkannt wird, dass sich der Innenraum nicht in dem vorgegebenen Zustand befindet, und wobei bei Erkennen, dass sich der Innenraum nicht in dem vorgegebenen Zustand befindet, ein Signal ausgegeben oder abgespeichert wird.

FIG 3

EP 4 435 638 A1

**Beschreibung**

Die Erfindung betrifft ein Verfahren zum Erkennen eines Zustandes eines Innenraumes eines öffentlichen Verkehrsmittels, eine Vorrichtung zum Erkennen eines Zustandes eines Innenraumes eines öffentlichen Verkehrsmittels, ein Verfahren zum Trainieren eines Autoencoders und ein Computerprogrammprodukt.

Aus dem Stand der Technik ist es bekannt, trainierte neuronale Netze zum Erkennen eines Objektes in einem Bild zu verwenden.

Die Aufgabe der Erfindung besteht darin, ein verbessertes Verfahren zum Erkennen eines Innenraumes eines öffentlichen Verkehrsmittels bereitzustellen, der sich nicht in einem vorgegebenen Zustand befindet.

Die Aufgabe der Erfindung wird durch die unabhängigen Patentansprüche gelöst. Weiterbildungen der Erfindung sind in den abhängigen Ansprüchen angegeben.

Es wird ein computerimplementiertes Verfahren zum Erkennen eines Innenraumes eines öffentlichen Verkehrsmittels vorgeschlagen, der sich nicht in einem vorgegebenen Zustand befindet. Der vorgegebene Zustand wird beispielsweise durch einen leeren Innenraum definiert, in dem nur die Inneneinrichtung des Innenraumes vorhanden ist und keine Objekte, wie zum Beispiel Menschen, Fahrräder, Taschen oder sonstige Gegenstände sich im Innenraum befinden.

Es wird ein aufgenommenes Bild des Innenraumes des öffentlichen Verkehrsmittels mithilfe wenigstens eines trainierten neuronalen Netzes verarbeitet. Das neuronale Netz weist mehrere Schichten auf, wobei die Schichten jeweils eine Merkmalskarte für das Bild darstellen. Es wird ein aufgenommenes Bild des Innenraumes des öffentlichen Verkehrsmittels von dem trainierten neuronalen Netz verarbeitet, indem die Schichten des trainierten neuronalen Netzes mehrere Merkmalskarten für das Bild erstellen.

Eine Merkmalskarte weist Merkmale für Bildausschnitte des Bildes auf, wobei ein Bildausschnitt wenigstens einen oder mehrere Bildpixel aufweisen kann. Die Merkmale mehrerer Merkmalskarten, insbesondere von zwei Merkmalskarten, werden mit Vergleichswerten verglichen. Ergibt der Vergleich, dass die Merkmale der Merkmalskarten von den Vergleichswerten um mehr als einen vorgegebenen Wert abweichen, so wird erkannt, dass der Innenraum sich nicht in dem vorgegebenen Zustand befindet. Wird erkannt, dass sich der Innenraum nicht in dem vorgegebenen Zustand befindet, so wird ein Signal ausgegeben oder abgespeichert. Das Signal zeigt beispielsweise an, dass sich ein Objekt, insbesondere ein Mensch oder ein Gegenstand, wie beispielsweise eine Tasche oder Fahrrad, im Innenraum des öffentlichen Verkehrsmittels befindet. Somit wird beispielsweise eine Bedienperson beauftragt, den nicht leeren Innenraum zu überprüfen und das Objekt, insbesondere die Person, aus dem Innenraum zu entfernen.

Die Überprüfung des Innenraumes ist insbesondere von Vorteil, wenn das öffentliche Verkehrsmittel abgestellt werden soll. Mithilfe des vorgeschlagenen Verfahrens ist es nicht erforderlich, dass eine Bedienperson den Innenraum des Verkehrsmittels persönlich überprüft, sondern es wird eine automatische optische Überprüfung des Innenraumes dahingehend durchgeführt, ob sich ein Objekt, insbesondere eine Person oder ein Gegenstand, im Innenraum befindet.

Mithilfe des vorgeschlagenen Verfahrens, bei dem verschiedene Merkmalskarten mit Vergleichswerten verglichen werden, wird eine erhöhte Sicherheit dafür erreicht, dass ein im Innenraum befindliches Objekt mit höherer Sicherheit erkannt wird.

Durch die Verwendung von mehreren Merkmalskarten ist das vorgeschlagene Verfahren unempfindlicher gegenüber sich ändernden Belichtungsverhältnissen des Innenraumes, insbesondere durch die sich ändernde natürliche Sonnenstrahlung. Zudem ist das vorgeschlagene Verfahren aufgrund der Berücksichtigung der Merkmale mehrerer Merkmalskarten unempfindlicher gegenüber Verschmutzungen oder farblichen Veränderungen des Innenraumes, die beispielsweise durch Graffitis erreicht wird.

Durch die Berücksichtigung der Merkmale mehrerer Merkmalskarten werden nicht nur die Merkmale von einzelnen Bildpixeln oder die Merkmale von einzelnen Bildausschnitten des Bildes berücksichtigt, sondern es wird ein Merkmalsraum berücksichtigt, der sowohl die Merkmale in einer zweidimensionalen Ebene de+r Merkmalskarte als auch die Merkmale in einer dreidimensionalen Ebene, das heißt für verschiedene Merkmalskarten, berücksichtigen kann. Dadurch wird das vorgeschlagene Verfahren robuster gegenüber Fehlerkennungen.

In einer Ausführungsform des Verfahrens ist ein weiteres trainiertes neuronales Netz mit mehreren Schichten vorgesehen, wobei die Schichten des weiteren trainierten neuronalen Netzes weitere Merkmalskarten des Bildes bereitstellen, und wobei die Merkmale der weiteren Merkmalskarten des weiteren trainierten neuronalen Netzes die Vergleichswerte darstellen. Auf diese Weise kann ein sogenanntes Lehrer-Student-System verwendet werden, um das beschriebene Verfahren auszuführen.

In einer weiteren Ausführungsform sind das neuronale Netz und das weitere neuronale Netz mit unterschiedlichen Bildern und/oder mit unterschiedlicher Anzahl von Bildern und/oder mit unterschiedlichen Verfahren trainiert worden. Auf diese Weise kann ein robustes Verfahren bereitgestellt werden, mit dem insbesondere Personen oder Gegenstände im Innenraum erkannt werden.

In einer weiteren Ausführungsform des Verfahrens wird das neuronale Netz in der Weise trainiert, dass die Schichten des neuronalen Netzes eine Merkmalskarte für Bildausschnitte des Bildes darstellen, wobei die Merkmalskarte für die Bildausschnitte multivariante Gaußverteilungen aufweist. Von dem aufgenommenen Bild des Innenraumes des öffentlichen Verkehrsmittels werden mithilfe der Schichten des trainierten neuronalen Netzes mehrere Merkmalskarten mit multivarianten Gaußverteilungen für die Bildausschnitte des Bildes generiert. Die Gaußverteilungen der Bildausschnitte mehrerer Merkmalskarten werden mit Vergleichswerten verglichen. Bei einer vorgegebenen Abweichung der Gaußverteilungen von den Vergleichswerten wird erkannt, dass sich der Innenraum nicht in dem vorgegebenen Zustand befindet, das heißt, dass sich ein Objekt, insbesondere eine Person, eine Tasche, ein Fahrrad oder ein sonstiger Gegenstand im Innenraum befindet.

Durch die Verwendung von Merkmalskarten mit Gaußverteilungen für die Bildausschnitte wird aufgrund der multivarianten Gaußverteilungen eine semantische Information bereits innerhalb einer Merkmalskarte berücksichtigt. Dadurch wird die Robustheit des Verfahrens verbessert, sodass auch bei ungünstigen Lichtverhältnissen bei der Aufnahme des Bildes zuverlässig und sicher erkannt werden kann, ob sich ein Objekt, insbesondere eine Person, im Innenraum befindet oder nicht.

In einer Ausführungsform werden die Vergleichswerte mithilfe des trainierten neuronalen Netzes während eines Trainingsverfahrens mit einer Vielzahl von Testbildern erzeugt. Die Vergleichswerte stellen beispielsweise Mittelwerte der multivarianten Gaußverteilungen dar, die während des Trainingsverfahrens mit der Vielzahl der Testbilder ermittelt wurden. Auf diese Weise werden gemittelte multivariante Gaußverteilungen als Vergleichswerte ermittelt, die eine genauere Überprüfung, ob sich der Innenraum in dem vorgegeben Zustand befindet, ermöglichen.

Versuche haben gezeigt, dass es von Vorteil ist, das neuronale Netz in Form eines trainierten Encoders eines trainierten Autoencoders auszubilden. Autoencoder können präzise und robust für die vorgeschlagene Aufgabe trainiert werden. Zur Lösung der vorgeschlagenen Aufgabe kann der trainierte Encoder des trainierten Autoencoders als trainiertes neuronales Netz zum Erkennen des Zustandes des Innenraumes verwendet werden.

Die Robustheit des beschriebenen Verfahrens wird dadurch erhöht, dass der trainierte Encoder als Teil eines trainierten Autoencoders ausgebildet ist, wobei der Autoencoder mithilfe eines maskierten Trainingsverfahrens trainiert wurde. Die Verwendung eines maskierten Trainingsverfahrens ermöglicht es, den Encoder speziell auf die vorgegebenen Randbedingungen des Innenraumes zu trainieren. Versuche haben gezeigt, dass der Encoder besonders gut trainiert wird, wenn beim Trainieren des Autoencoders vorgegebene Bereiche des Innenraumes, insbesondere Sitze des Innenraumes und/oder vorgegebene Bereiche des Innenraumes, die über Fenster des öffentlichen Verkehrsmittels mit natürlicher Lichtstrahlung belichtet werden, maskiert werden.

Durch das Maskieren der Sitze des Innenraumes und der Bereiche, die stark unterschiedlichen Belichtungen ausgesetzt sein können, wird der trainierte Encoder besonders sensitiv für das Erkennen von Objekten, wie beispielsweise Personen oder Gegenständen, die sich insbesondere im Bereich der Sitze befinden. Zudem wird der trainierte Encoder besonders unempfindlich gegenüber sich verändernder natürlicher Lichtstrahlung in den maskierten Bereichen. Auf diese Weise wird insgesamt ein verbesserter trainierter Encoder bereitgestellt und somit das Verfahren insgesamt verbessert.

Versuche haben gezeigt, dass die Ausbildung des neuronalen Netzes in Form wenigstens eines Teils eines ResNets, insbesondere als ResNet, vorzugsweise als ResNet-18 vorteilhaft ist. Anstelle des neuronalen Netzes in Form eines ResNets können auch andere Arten von Architekturen von neuronalen Netzen verwendet werden.

Es wird eine Vorrichtung zum Erkennen eines Innenraumes eines öffentlichen Verkehrsmittels, der sich nicht in einem vorgegebenen Zustand befindet, vorgeschlagen. Die Vorrichtung weist ein trainiertes neuronales Netz auf, wobei das trainierte neuronale Netz ausgebildet ist, ein aufgenommenes Bild des Innenraumes des öffentlichen Verkehrsmittels in der Weise zu analysieren, dass Schichten des trainierten neuronalen Netzes Merkmalskarten des Bildes erstellen.

Weiterhin ist die Vorrichtung ausgebildet, um die Merkmale von wenigstens zwei Merkmalskarten mit Vergleichswerten zu vergleichen. Weisen die Merkmale der Merkmalskarten mehr als eine vorgegebene Abweichung von den Vergleichswerten auf, so wird ein Innenraum erkannt, der sich nicht in dem vorgegebenen Zustand befindet. Bei Erkennen eines Innenraumes, der sich nicht in dem vorgegebenen Zustand befindet, wird von der Vorrichtung ein Signal ausgegeben oder das Signal abgespeichert.

Durch die Verwendung der Merkmale verschiedener Merkmalskarten wird ein mehrdimensionaler Merkmalsraum für die Erkennung des Zustandes des Innenraumes verwendet. Dadurch wird eine höhere Robustheit für eine sichere Erkennung des Zustandes des Innenraumes erreicht. Somit wird mehr semantische Information bei der Erkennung des Zustandes des Innenraumes berücksichtigt. Dadurch wird die Erkennung robuster, insbesondere gegenüber sich ändernden Lichtverhältnissen des aufgenommenen Bildes oder einem sich ändernden farblichen Aussehen der Inneneinrichtung des Innenraumes.

In einer Ausführungsform ist das trainierte neuronale Netz in Form eines trainierten Encoders ausgebildet. Der trainierte Encoder kann beispielsweise als Teil eines trainierten Autoencoders ausgebildet sein, wobei beim Training des Autoencoders insbesondere ein maskiertes Trainingsverfahren verwendet wurde. Durch das maskierte Trainingsverfahren wird ein robuster trainierter Encoder bereitgestellt, der gegenüber unterschiedlichen Belichtungen des Bildes in vorbestimmten Bereichen unempfindlicher ist. Zudem kann der trainierte Encoder insbesondere für die Ermittlung einer Merkmalskarte im Bereich eines Sitzes verbesserte Eigenschaften aufweisen.

Das neuronale Netz ist beispielsweise in Form eines ResNets, insbesondere in Form eines Teils einer ResNet-Architektur ausgebildet.

Es wird ein Verfahren zum Trainieren eines Autoencoders mit einem Encoder und einem Decoder bereitgestellt, wobei der Autoencoder in Form eines neuronalen Netzes ausgebildet ist. Beim Trainieren des Autoencoders mit Bildern eines Innenraumes des öffentlichen Verkehrsmittels werden vorgegebene Bereiche des Innenraumes maskiert. Insbesondere können die vorgegebenen Bereiche Sitze des Innenraumes und/oder Bereiche des Innenraumes darstellen, die über Fenster des öffentlichen Verkehrsmittels mit stark variierender, natürlicher Lichtstrahlung belichtet werden. Der Autoencoder wird mit den maskierten Bildern, bei denen die vorgegebenen Bereiche ausgeblendet sind, trainiert.

Der trainierte Encoder des Autoencoders wird zum Erkennen eines vorgegebenen Zustandes des Innenraumes des öffentlichen Verkehrsmittels verwendet. Dabei kann mithilfe des trainierten Encoders der Zustand des Innenraumes dahingehend überprüft werden, ob sich ein Objekt, das nicht zur Inneneinrichtung des Innenraumes gehört, im Innenraum befindet. Versuche haben gezeigt, dass diese spezielle Maskierung der Trainingsbilder die Robustheit erhöht und die sichere Erkennung des nicht vorgegebenen Zustandes des Innenraumes des öffentlichen Verkehrsmittels verbessert.

Der nicht vorgegebene Zustand des Innenraumes besteht beispielsweise darin, dass sich ein Objekt im Innenraum befindet, das nicht Teil der Einrichtung des Innenraumes ist. Das Objekt kann beispielsweise eine Person, ein Tier, ein Fahrrad, eine Tasche oder ein sonstiger Gegenstand sein. Der vorgegebene Zustand des Innenraumes ist der Innenraum mit der Inneneinrichtung ohne weitere Objekte.

Weiterhin wird ein Computerprogrammprodukt mit Programmcodemitteln bereitgestellt, die bei einem Ablauf auf einer Recheneinheit oder einem Computer ausgebildet sind, eines der beschriebenen Verfahren auszuführen.

Unabhängig vom grammatikalischen Geschlecht eines bestimmten Begriffes sind Personen mit männlicher, weiblicher oder anderer Geschlechteridentität mitumfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1 eine schematische Darstellung eines öffentlichen Verkehrsmittels,

FIG 2 ein Bild des Innenraumes des öffentlichen Verkehrsmittels ohne ein Objekt,

FIG 3 eine schematische Darstellung der Vorrichtung zum Überprüfen eines Zustandes des Innenraumes des öffentlichen Verkehrsmittels,

FIG 4 eine schematische Darstellung einer weiteren Ausführungsform einer Vorrichtung zum Überprüfen des Zustandes des Innenraumes,

FIG 5 eine schematische Darstellung einer weiteren Ausführungsform einer Vorrichtung zum Überprüfen des Zustandes des Innenraumes,

FIG 6 eine schematische Darstellung einer weiteren Ausführungsform der Vorrichtung zum Überprüfen des Zustandes des Innenraumes,

FIG 7 eine schematische Darstellung eines maskierten Trainingsverfahrens eines Autoencoders, und

FIG 8 eine schematische Darstellung eines Trainingsbildes für das Trainieren des Autoencoders
zeigt.

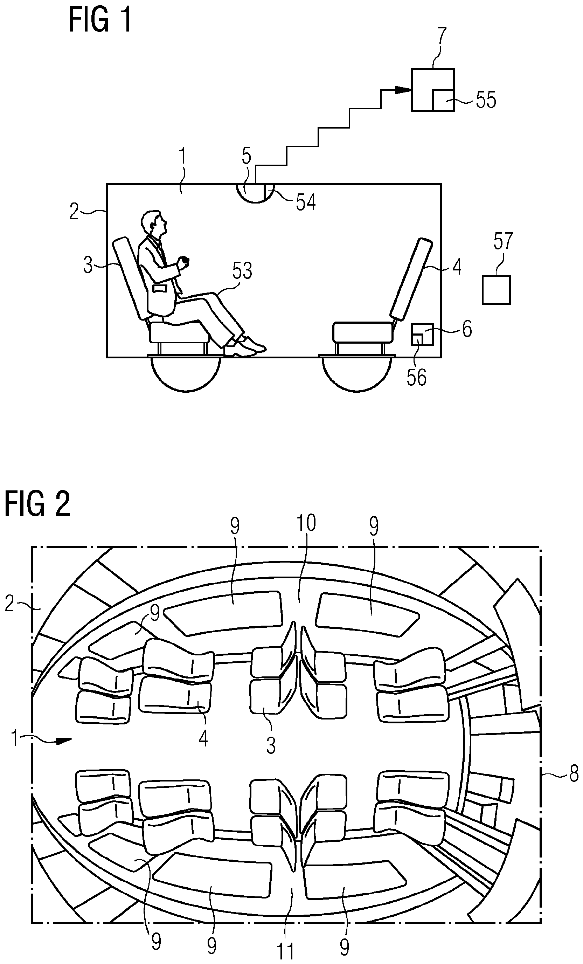

FIG 1 zeigt in einer schematischen Darstellung einen Innenraum 1 eines öffentlichen Verkehrsmittels 2, wobei in dem Innenraum 1 Sitze 3, 4 vorgesehen sind. An einer Decke des Innenraumes 1 ist eine Kamera 5 angeordnet. Die Kamera 5 ist ausgebildet, um Bilder oder Videos des Innenraumes 1 aufzunehmen. Die Kamera 5 kann auch an anderen Positionen des Innenraumes 1 angeordnet sein. Auf einem ersten Sitz 3 sitzt eine Person 53. Das öffentliche Verkehrsmittel 2 kann beispielsweise ein Zug, eine S-Bahn, ein Bus oder ein autonomes Fahrzeug sein. Die Kamera 5 weist einen Datenspeicher 54 auf, in dem die Bilder oder Filme, die die Kamera 5 aufnimmt, zwischengespeichert werden können. Zudem ist die Kamera 5 mit einem Computer 6 über eine drahtlose oder drahtgebundene Datenschnittstelle verbunden. Der Computer 6 kann beispielsweise im öffentlichen Verkehrsmittel 2 angeordnet sein. Weiterhin kann die Kamera 5 über eine drahtlose Datenschnittstelle mit einem externen Computer 7 in Verbindung stehen. Der externe Computer 7 kann ortsfest in einem Gebäude oder einem Gehäuse z.B. neben einer Straße oder Schienen des öffentlichen Verkehrsmittels angeordnet sein. Die Datenschnittstelle kann über eine WLAN-Verbindung eine Mobilfunkverbindung oder ein Internetprotokoll realisiert sein. Die Kamera 5 ist ausgebildet, um die vom Innenraum 1 aufgenommenen Bilder oder Filme an den Computer 6 und/oder an den externen Computer 7 zu übermitteln.

Der Computer 6 und/oder der externe Computer 7 sind ausgebildet, um über eine Schnittstelle ein Signal auszugeben, insbesondere ein akustisches Signal über einen Lautsprecher auszugeben, das Signal über eine Datenschnittstelle an einen Empfänger 57 zu übertragen oder das Signal in einem weiteren Datenspeicher 55, 56 des Computers 6 oder des externen Computers 7 abzuspeichern. Der Empfänger 57 kann ein Mobiltelefon oder ein mobiles Endgerät sein. Zudem kann der Empfänger 57 sich auch im öffentlichen Verkehrsmittel 2 befinden. Der Empfänger 57 und/oder der Computer 6 und/oder der externe Computer 7 verfügen über optische und/oder akustische Ausgabemittel. Der Empfänger 57 ist ausgebildet, um bei Empfang eines Signals eine vorgegebene optische Anzeige oder akustische Ausgabe durchzuführen. Die Anzeige oder Ausgabe kann ein Hinweis sein, dass das öffentliche Verkehrsmittel zu verlassen ist. Zudem kann die Anzeige

FIG 2 zeigt in einer schematischen Darstellung ein von der Kamera 5 aufgenommenes Bild des Innenraumes 1 des öffentlichen Verkehrsmittels 2. In dem dargestellten Beispiel befindet sich der Innenraum 1 in dem vorgegebenen Zustand, in dem sich kein Objekt im Innenraum 1 befindet, das nicht zur Innenausstattung des Innenraumes 1 gehört. Das heißt, es sind keine Personen oder Tiere oder weitere Gegenstände im Innenraum 1 vorhanden. Somit zeigt das Bild 8 einen leeren Innenraum 1 des öffentlichen Verkehrsmittels 2. Das Bild 8 zeigt mehrere Sitze 3, 4 und Seitenfenster 9, die in Seitenwänden 10, 11 des Innenraumes 1.

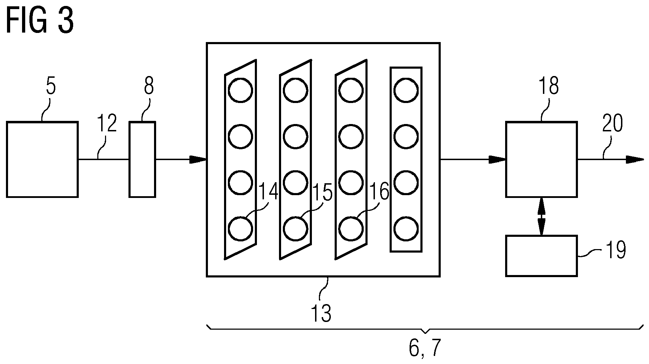

FIG 3 zeigt in einer schematischen Darstellung eine Vorrichtung zum Erkennen eines Zustandes eines Innenraumes eines öffentlichen Verkehrsmittels. Die Kamera 5 übermittelt über eine Datenschnittstelle 12 ein Bild 8 an den Computer 6 oder den externen Computer 7. Der Computer 6 und der externe Computer 7 können beispielsweise identisch ausgebildet sein. Der Computer 6 und/oder der externe Computer 7 weisen ein trainiertes neuronales Netz 13 auf, das mehrere Schichten 14, 15, 16 aufweist, wobei die Schichten 14, 15, 16 des neuronalen Netzes 13 ausgebildet sind, um verschiedene Merkmalskarten des Bildes darzustellen. Eine Schicht stellt eine zweidimensionale Anordnung von Knotenpunkten dar, die jeweils ein optisches Merkmal für einen Bildausschnitt des Bildes darstellen. Die Schichten 14, 15, 16 stellen jeweils eine zweidimensionale Merkmalskarte für das Bild 8 dar. Die Merkmalskarten 14, 15, 16 unterscheiden sich in den enthaltenen Arten der Merkmale. Jede Merkmalskarte 14, 15, 16 weist Merkmale für Bildausschnitte des Bildes auf, wobei ein Bildausschnitt einen oder mehrere Bildpixel aufweisen kann.

Abhängig von der gewählten Ausführungsform ist das trainierte neuronale Netz 13 ausgebildet, um die Merkmale der Merkmalskarten der Schichten 14, 15, 16 an eine Vergleichseinheit 18 auszugeben. Die Vergleichseinheit 18 ist ausgebildet, um die Merkmale der mehreren Merkmalskarten mit vorgegebenen Vergleichswerten zu vergleichen. Die vorgegebenen Vergleichswerte können in einem Datenspeicher 19 abgelegt sein, der mit der Vergleichseinheit 18 in Verbindung steht.

Ergibt der Vergleich der Merkmale der Merkmalskarten mit den Vergleichswerten, dass die Merkmale der Merkmalskarten mehr als vorgegebene Werte von den Vergleichswerten abweichen, so zeigt dies einen Innenraum an, der sich nicht in dem vorgegebenen Zustand befindet. Als Folge davon gibt die Vergleichseinheit 18 ein vorgegebenes Signal 20 an den Empfänger 57 aus oder speichert das vorgegebene Signal 20 im Datenspeicher 19 ab. Die Ausgabe des Signales 20 kann drahtgebunden oder drahtlos erfolgen und beispielsweise an den Empfänger 57 übertragen werden. Der Empfänger 57 kann ausgebildet sein, um nach Empfang des Signales ein weiteres Signal optisch über eine Anzeige oder akustisch über einen Lautsprecher auszugeben. Dadurch wird beispielsweise einer Bedienperson mitgeteilt, dass sich noch ein Objekt im Innenraum des öffentlichen Verkehrsmittels befindet, das heißt dass der Innenraum des öffentlichen Verkehrsmittels nicht leer ist. Das Signal zeigt der Bedienperson an, dass sich ein Objekt im Innenraum des öffentlichen Verkehrsmittels befindet und somit das Objekt aus dem Innenraum des öffentlichen Verkehrsmittels entfernt werden sollte.

Die Vergleichswerte können in Form eines einzelnen Vergleichswertes oder in Form von mehreren Vergleichswerten oder in Form von Vergleichsmerkmalskarten ausgebildet sein. Beispielsweise wird eine Abweichung der Merkmale der Merkmalskarten des trainierten neuronalen Netzes bei mehr als 5 Prozent von dem oder den Vergleichswerten dahingehend bewertet, dass sich der Innenraum nicht in dem vorgegebenen Zustand befindet, d.h., dass sich ein Objekt im Innenraum befindet, das nicht Teil der Inneneinrichtung des Innenraumes ist. Das Objekt kann eine Person, ein Tier oder ein sonstiger Gegenstand wie ein Fahrrad oder eine Tasche sein.

Das trainiertes neuronale Netz 13 kann als trainiertes gefaltetes neuronales Netz (Convolutional Neural Network) ausgebildet sein, das beispielsweise mithilfe eines überwachten selbstlernenden Verfahren mit Trainingsbildern trainiert wurde, wobei die Trainingsbilder gelabelte Trainingsbilder darstellen. Das Label des Trainingsbildes zeigt an, ob das Trainingsbild einen Innenraum mit einem Objekt oder um einen Innenraum ohne ein Objekt, d.h. einen Innenraum im vorgegebenen Zustand, zeigt. Mithilfe des Labels des Bildes ist beim Training des neuronalen Netzes bekannt, welches Trainingsbild einen leeren Innenraum, das heißt einen Innenraum in dem vorgegebenen Zustand, darstellt, oder einen Innenraum, in dem sich eine Person, ein Tier, ein Gegenstand befindet, und somit einen Innenraum darstellt, der sich nicht in dem vorgegebenen Zustand befindet. Abhängig von der gewählten Ausführungsform können die Trainingsbilder in der Weise ausgebildet sein, dass einzelne Pixel oder Bildbereiche des Trainingsbildes einzeln gelabelt sind. Das neuronale Netz kann in Form eines Computerprogrammes und/oder in Form einer elektronischen Schaltung realisiert sein. Beispielsweise ist das neuronale Netz in Form eines gefalteten Autoencoders ausgebildet. Zudem kann das neuronale Netz 13 in Form eines ResNets, insbesondere in Form eines ResNet-18 oder eines Teils des ResNets ausgebildet sein. Die Trainingsbilder können beispielsweise in FIG 2 ausgebildet sein, wobei die Trainingsbilder gelabelt sind.

Die beschriebene Vorrichtung und das beschriebene Verfahren ermöglichen es, Innenräume eines öffentlichen Verkehrsmittels automatisch dahingehend zu überprüfen, ob sich noch Objekte, das heißt Personen, Tiere, Gegenstände im Innenraum befinden. Dies kann insbesondere erforderlich sein, bevor das öffentliche Verkehrsmittel abgestellt wird.

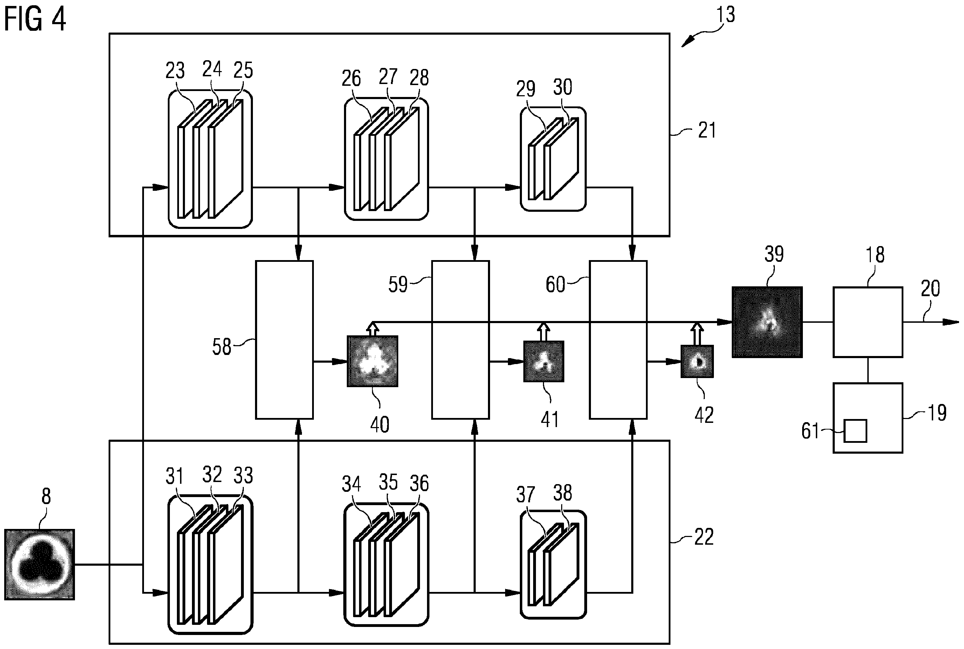

FIG 4 zeigt in einer schematischen Darstellung eine weitere Ausführungsform eines neuronalen Netzes 13, das ein erstes trainiertes neuronales Netz 21 und ein zweites trainiertes neuronales Netz 22 aufweist. Das erste trainierte neuronale Netz 21 weist eine Vielzahl von verborgenen Schichten 23, 24, 25, 26, 27, 28, 29, 30 auf. Das zweite neuronale Netz 22 weist ebenfalls eine Vielzahl von verborgenen Schichten 31 bis 38 auf. Jede verborgene Schicht des ersten und des zweiten neuronalen Netzes 21, 22 stellt eine zweidimensionale Anordnung von Knotenpunkten dar, wobei jeder Knotenpunkt ein optisches Merkmal für einen Bildbereich eines Bildes repräsentiert. Jede verborgene Schicht des ersten und des zweiten neuronalen Netzes 21, 22 stellt somit eine zweidimensionale Merkmalskarte von Merkmalen des Bildes dar. Das erste und das zweite neuronale Netz 21, 22 sind beispielsweise als trainierte gefaltete neuronale Netze ausgebildet. Das erste neuronale Netz 21 wird als Lehrer-Netz und das zweite neuronale Netz 22 wird als Studenten-Netz bezeichnet.

Die Vorrichtung mit dem ersten und zweiten trainierten neuronalen Netz 21, 22 ist ausgebildet, um eine Anomaliekarte 39 für ein Bild 8 zu erzeugen. Die Anomaliekarte 39 ist in Bereiche unterteilt, die wenigstens einem oder mehreren Bildpixeln des Bildes 8 zugeordnet sind. Jedem der Bereiche ist ein Anomaliewert zugeordnet. Somit enthält die Anomaliekarte 39 ein zweidimensionales Raster mit zugeordneten Anomaliewerten.

Es ist eine Referenzkarte 61 in einem Datenspeicher 19 abgespeichert, auf den die Vergleichseinheit 18 zugreifen kann. Die Referenzkarte 61 stellt eine zweidimensionale Karte dar, die in Bereiche unterteilt ist, wobei die Einteilung der Bereiche der Referenzkarte 61 der Einteilung der Bereiche der Anomaliekarte 39 entsprechen kann. Jedem Bereich der Referenzkarte 61 ist ein Referenzwert zugeordnet. Somit enthält die Referenzkarte 61 ein zweidimensionales Raster mit zugeordneten Referenzwerten.

Die Anomaliekarte 39 wird der Vergleichseinheit 18 zugeführt. Die Vergleichseinheit 18 vergleicht die Werte der Bereiche der Anomaliekarte 39 mit den Werten der entsprechenden Bereiche der Referenzkarte. Aus den Abweichungen zwischen den Referenzwerten und den Anomaliewerten erkennt die Vergleichseinheit 18, ob ein Bild 8 des Innenraumes, das dem ersten und dem zweiten trainierten neuronalen Netz 21, 22 zugeführt wurde, einen Innenraum mit einem vorgegebenen Zustand darstellt oder nicht. Die Vergleichseinheit 18 kann einen Innenraum mit dem vorgegebenen Zustand erkennen, wenn z.B. die Abweichung der Anomaliewerte der Anomaliekarte 39 von den Referenzwerten der Referenzkarte 61 im Mittel unter einem vorgegebenen Wert liegt. Es können jedoch auch andere Vergleichswerte oder Vergleichsverfahren verwendet werden, um ein Bild 8 dahingehend zu bewerten, ob es einen Innenraum in dem vorgegebenen Zustand zeigt oder ob sich ein Objekt im Innenraum befindet.

Die Anomaliekarte 39 kann folgendermaßen ermittelt werden: Die Merkmalskarten der verborgenen Schichten des ersten und des zweiten neuronalen Netzes 21, 22 sind in Bereiche unterteilt, die wenigstens einem oder mehreren Bildpixeln zugeordnet sind. Jedem der Bereiche der Merkmalskarte ist ein Wert eines Merkmals zugeordnet. Somit enthält die Merkmalskarte ein zweidimensionales Raster von Bereichen mit zugeordneten Werten von Merkmalen.

Die Merkmale der Bereiche der Merkmalskarte der dritten Schicht 25 des ersten trainierten neuronalen Netzes 21 werden mit den Merkmalen der entsprechenden Bereiche der Merkmalskarte der dritten Schicht 33 des zweiten trainierten neuronalen Netzes 22 in einem ersten Vergleichsblock 58 verglichen und die Differenzwerte werden in den entsprechenden Bereichen einer ersten Anomaliekarte 40 abgespeichert. In jedem Bereich der ersten Anomaliekarte 40, der wenigstens einen Bildpixel des zugeführten Bildes 8 repräsentiert, wird die Differenz zwischen den Merkmalen der dritten Schicht des ersten Netzes und der dritten Schicht des zweiten Netzes abgespeichert.

Zudem werden abhängig von der gewählten Ausführungsform die Merkmale der Merkmalskarten der sechsten Schicht 28 des ersten trainierten neuronalen Netzes 21 und der sechsten Schicht 36 des zweiten trainierten neuronalen Netzes 22 in einem zweiten Vergleichsblock 59 miteinander verglichen und die Differenz in Bereichen einer zweiten Anomaliekarte 42 gespeichert.

Zudem kann abhängig von der gewählten Ausführungsform eine Differenz zwischen den Merkmalen der Merkmalskarte der achten Schicht 30 des ersten trainierten neuronalen Netzes 21 und der achten Schicht 38 des zweiten trainierten neuronalen Netzes 22 in einem dritten Vergleichsblock 60 gebildet werden und die Differenzwerte in Bereichen einer dritten Anomaliekarte 42 abgespeichert werden. Die erste, die zweite und/oder die dritte Anomaliekarte 40, 41, 42 werden zu der Anomaliekarte 39 vorzugsweise addiert. Abhängig von der gewählten Ausführungsform kann die Anomaliekarte 39 auch nur die erste und/oder die zweite und/oder die dritte Anomaliekarte 40, 41, 42 enthalten. Zudem können die erste, die zweite und die dritte Anomaliekarte auch von Werten von Merkmalskarten anderer Schichten des ersten und des zweiten trainierten neuronalen Netzes 21, 22 gebildet werden. Die Funktion des ersten und/oder des zweiten und/oder des dritten Vergleichsblocks 58, 59, 60 kann vom neuronalen Netz 13 oder von einer weiteren Recheneinheit ausgeführt werden.

Zum Training des zweites neuronalen Netzes 22 kann ein Schüler-Lehrer-Lernverfahren verwendet werden, um implizit die Merkmalsverteilung der normalen Trainingsbilder 8, d.h. der Bilder von Innenräumen, die nur die Inneneinrichtung aufweisen, zu modellieren. Das erste Netz 21, das das Lehrer-Netz darstellt, ist z.B. ein leistungsstarkes Netz, das für die Bildklassifizierungsaufgabe trainiert wurde. Das erste Netz 21 kann z.B. ein ResNet-18 Netz sein, das mithilfe der gelabelten Testbilddatenbank ImageNet trainiert wurde. Um den Informationsverlust zu verringern, kann das zweite Netz 22 vorzugsweise die gleiche Struktur wie das Lehrer-Netz 21 aufweisen.

Bei dem beschriebenen Verfahren wird ein Schlüsselfaktor berücksichtigt, nämlich die Position der Destillation. Tiefe neuronale Netze erzeugen eine Pyramide von Merkmalen für jedes Eingabebild. Die untersten versteckten Schichten des neuronalen Netzes ergeben höher aufgelöste Merkmale, die Low-Level-Informationen wie Texturen, Kanten und Farben kodieren. Im Gegensatz dazu liefern die oberen versteckten Schichten des neuronalen Netzes niedrig aufgelöste Merkmale, die Kontextinformationen enthalten. Die von den unteren Schichten des neuronalen Netzes erzeugten Merkmale sind oft allgemein genug und können von verschiedenen Erkennungsaufgaben gemeinsam genutzt werden. Dies motiviert dazu, Merkmale auf niedriger und hoher Ebene auf komplementäre Weise zu integrieren. Da verschiedene Schichten in tiefen neuronalen Netzen unterschiedlichen rezeptiven Feldern entsprechen, wählen wir die Merkmale aus, die von einigen aufeinanderfolgenden unteren Schichtgruppen (z.B. Blöcke in ResNet-18) des Lehrer-Netzes 21 extrahiert wurden, um das Lernen des Schüler-Netzes 22 zu steuern. Dieser hierarchische Merkmalsabgleich ermöglicht es, Anomalien unterschiedlicher Größe zu erkennen.

Die Trainingsphase des Lehrer-Schüler-Netzwerksystems zielt darauf ab, ein gutes Schüler-Netz 22 zu erhalten, das die Ausgaben eines festen Lehrer-Netzes 21 auf normalen Bildern, d.h. Bildern von Innenräumen, die nur eine Inneneinrichtung und keine weiteren Objekte zeigen, gut imitiert. Bei einem Trainingsdatensatz von normalen Bildern $\mathcal{D} = \{\mathbf{I}_1, \mathbf{I}_2,..., \mathbf{I}_n\}$ besteht unser Ziel darin, die normale Datenvielfalt zu erfassen, indem wir die Merkmale, die von den $L$ Gruppen der unteren Schicht des Lehrer-Netzes 21 extrahiert wurden, mit den entsprechenden Merkmalen des Schüler-Netzes 22 abzugleichen. Für ein Eingabebild $\mathbf{I}_k \in \mathbb{R}^{w \times h \times c}$, wobei $h$ die Höhe, $w$ die Breite und $c$ die Anzahl der Farbkanäle ist, gibt die $l$-te Gruppe der unteren Schicht des Lehrer-Netzes 21 und des Schüler-Netzes 22 eine Merkmalskarte $F_t^l(\mathbf{I}_k) \in \mathbb{R}^{w_l \times h_l \times d_l}$ und $F_s^l(\mathbf{I}_k) \in \mathbb{R}^{w_l \times h_l \times d_l}$, wobei $w_l$, $h_l$ und $d_l$ die Breite, Höhe und die Kanalnummer der Merkmalskarte bezeichnen. Da es keine Vorkenntnisse über das Aussehen und die Position von Objekten gibt, wird einfach angenommen, dass alle Bildregionen in der Trainingsmenge anomaliefrei sind, d.h. dass keine Objekte außer der Inneneinrichtung im Innenraum dargestellt sind. $F_t^l(\mathbf{I}_k)_{ij} \in \mathbb{R}^{d_l}$ und $F_s^l(\mathbf{I}_k)_{ij} \in \mathbb{R}^{d_l}$ sind Merkmalsvektoren an der Position $(i;j)$ in den Merkmalskarten des Lehrer-Netzes 21 bzw. des Schüler-Netzes 21. Wir definieren den Verlust an der Position $(i;j)$ als $\ell_2$-Distanz zwischen den $\ell_2$-normalisierten Merkmalsvektoren, und zwar:

$$\ell^l(\mathbf{I}_k)_{ij} = \frac{1}{2} \| \hat{F}_t^l(\mathbf{I}_k)_{ij} - \hat{F}_s^l(\mathbf{I}_k)_{ij} \|_{\ell_2}^2, \quad (1)$$

$$\hat{F}_t^l(\mathbf{I}_k)_{ij} = \frac{F_t^l(\mathbf{I}_k)_{ij}}{\|F_t^l(\mathbf{I}_k)_{ij}\|_{\ell_2}}, \quad \hat{F}_s^l(\mathbf{I}_k)_{ij} = \frac{F_s^l(\mathbf{I}_k)_{ij}}{\|F_s^l(\mathbf{I}_k)_{ij}\|_{\ell_2}}.$$

Es ist erwähnenswert, dass der in Gleichung 1 verwendete $\ell_2$-Abstand proportional zum Kosinusabstand ist, da $F_t^l(\mathbf{I}_k)$ und $F_s^l(\mathbf{I}_k)$ $\ell_2$-normierte Vektoren sind. Somit ist der Verlust $\ell^l(\mathbf{I}k)_{ij} \in (0,1)$. Der Verlust für das gesamte Bild $\mathbf{I}_k$ wird als Durchschnitt des Verlustes an jeder Position angegeben:

$$\ell^l(\mathbf{I}_k) = \frac{1}{w_l h_l} \sum_{i=1}^{w_l} \sum_{j=1}^{h_l} \ell^l(\mathbf{I}_k)_{ij} \quad (2)$$

und der Gesamtverlust ist der gewichtete Durchschnitt der Verluste auf den verschiedenen Pyramidenstufen:

$$\ell^l(\mathbf{I}_k) = \sum_{l=1}^{L} \alpha_l \ell^l(\mathbf{I}_k), \quad \text{s.t.} \quad \alpha_l \geq 0 \qquad (3)$$

wobei $\alpha_l$ die Auswirkung der *l*-ten Merkmalsskala auf die Erkennung von Anomalien darstellt. Wir setzen einfach $\alpha_l = 1$, $l = 1, ..., L$ in allen unseren Experimenten. Bei einem aus dem Trainingsdatensatz $\mathcal{D}$ abgetasteten Minibatch $\mathcal{B}$ aktualisieren wir das Schüler-Netz 22 durch Minimierung des Verlustes $\ell_{\mathcal{B}} = \frac{1}{|\mathcal{B}|}\sum_{k \in \mathcal{B}} \ell(\mathbf{I}_k)$. Es wird nur das Schüler-Netz 22 aktualisiert, während das Lehrer-Netz 21 während der gesamten Trainingsphase konstant gehalten wird.

In der Testphase soll eine Anomaliekarte $\Omega$ der Größe $w \times h$ für ein Testbild erstellt werden $\mathbf{J} \in \mathbb{R}^{w \times h \times c}$. Die Punktzahl $\Omega_{ij} \times$ **[0,1]** gibt an, wie stark das Pixel an der Position (i,j) von den Trainingsdaten abweicht. Wir leiten das Testbild J an das Lehrer-Netz 21 und das Schüler-Netz 22 weiter. $F_t^l(\mathbf{J})$ und $F_s^l(\mathbf{J})$ sollen diejenigen Merkmalskarten bezeichnen, die von der *l*-ten unteren Schichtgruppe des Lehrer-Netzes 21 bzw. des Schüler-Netzes 21 erzeugt werden. Wir können eine Anomaliekarte $\Omega^l(\mathbf{J})$ der Größe $w_l \times h_l$ errechnen, deren Element $\Omega_{ij}^l(\mathbf{J})$ der Verlust (Gl. 1) an der Position (*i,j*) ist. Die Anomaliekarte $\Omega^l(\mathbf{J})$ wird durch bilineare Interpolation auf die Größe $w \times h$ aufgestockt. Die resultierende Anomaliekarte ist als elementweises Produkt von L gleich großen, aufwärts abgetasteten Anomaliekarten definiert:

$$\Omega(\mathbf{J}) = \prod_{l=1}^{L} \text{Upsample } \Omega^l(\mathbf{J}) \qquad (4)$$

Ein Testbild kann als anomal bezeichnet, wenn irgendein Pixel des Bildes anomal ist. Infolgedessen wählen wir einfach den maximalen Wert in der Anomaliekarte, d.h. max($\Omega(\mathbf{J})$) als Anomaliewert für das Testbild **J**.

Wir führen Experimente z.B. mit dem Datensatz MVTec Anomaly Detection (MVTec AD) durch, wobei wir sowohl Anomalie-Erkennungsaufgaben auf Bildebene als auch auf Pixelebene berücksichtigen. Der Datensatz wurde speziell für den Vergleich von Algorithmen zur Lokalisierung von Anomalien erstellt. Für jede Kategorie enthält der Trainingssatz nur fehlerfreie Bilder, während der Testsatz sowohl fehlerfreie Bilder als auch fehlerhafte Bilder verschiedener Typen enthält. Die Leistung wird anhand von zwei gängigen Metriken gemessen: AUC-ROC und Pro-Region-Overlap (PRO).

Beispielsweise können die ersten drei Blöcke (d.h. conv2_x, conv3_x, conv4_x) von ResNet-18 als Pyramiden-Merkmal-Extraktoren sowohl für das Lehrer-Netz 21 als auch für das Schüler-Netz 22 verwendet werden. Die Parameter des Lehrer-Netzes 21 werden von dem auf der Testdatenbank ImageNet trainierten ResNet-18 kopiert, während die Parameter des Schüler-Netzes 22 zufällig initialisiert werden. Z.B. wird das Schüler-Netz 22 mit Stochastic Gradient Descendet (SGD = stochastischer Gradientenabstieg) mit einer Lernrate von 0,4 für 100 Epochen trainiert. Die Stapelgröße beträgt 32. Alle Bilder in den Trainings- und Testsätzen werden auf 256 × 256 verkleinert. Für jede Kategorie verwenden wir 80 % der Trainingsbilder, um das Schüler-Netz 22 zu erstellen, und behalten die restlichen 20 % für die Validierung. Für die Erkennung von Anomalien wählen wir z.B. den Prüfpunkt mit dem niedrigsten Validierungsfehler gemäß Gleichung 1 aus.

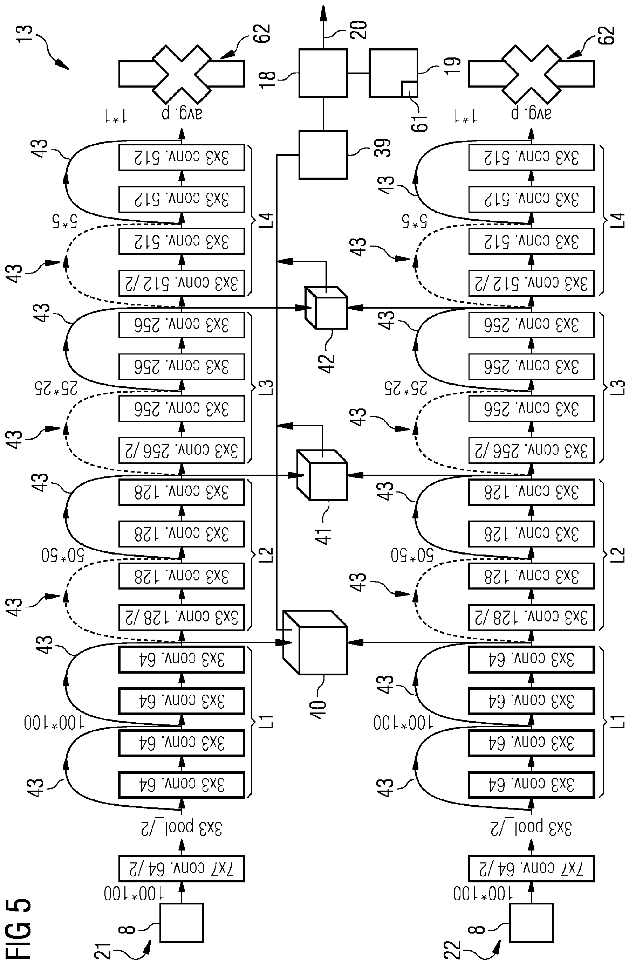

FIG 5 zeigt in einer schematischen Darstellung ein weiteres Verfahren und eine weitere Ausführungsform eines neuronalen Netzes 13, das ein erstes und ein zweites trainiertes neuronales Netz 21, 22 aufweist, die jeweils eine ResNet-18-Architektur besitzen. In dem dargestellten Ausführungsbeispiel weisen das erste trainierte neuronale Netz 21 und das zweite trainierte neuronale Netz 22 eine identische Architektur auf, wobei der letzte fully Connected Layer 62 der ResNet-18-Architektur nicht verwendet wird. Beim Fully Connected Layer oder Dense Layer handelt es sich um eine normale neuronale Netzstruktur, bei der alle Neuronen mit allen Inputs und allen Outputs verbunden sind.

Das Bild 8 des Innenraumes des öffentlichen Verkehrsmittels wird dem ersten und dem zweiten trainierten neuronalen Netz 21, 22 zugeführt. Das Bild 8 weist beispielsweise eine Größe von 100 × 100 Bildpixeln auf. Der Aufbau der ResNet-18-Architektur umfasst folgende Schichtabfolge des trainierten neuronalen Netzes 21, 22. Das erste und das zweite trainierte neuronale Netz 21, 22 weisen vorzugsweise eine identische Architektur, jedoch unterschiedliche Gewichtungsfaktoren aufgrund der unterschiedlichen Trainingsverfahren und/oder BIAS-Werte auf. In der Reihenfolge der Darstellung weist die ResNet-18-Architektur folgende Schichten auf:

> gefaltetes neuronales Netz mit einem Kernel von $7 \times 7$, 64 Filtern und einem Stride von 2,
> einem Maximum Pooling Layer mit einem Kernel von $3 \times 3$ und einem Stride von 2,
> in einem ersten Layer eine Abfolge von vier aufeinanderfolgenden gefalteten Schichten mit einem Kernel von $3 \times 3$ und 64 Filtern.

Auf den ersten Layer L1 folgt ein zweiter Layer L2, der vier identisch gefaltete Schichten mit einem Kernel von $3 \times 3$, 128 Filtern aufweist, wobei die erste Schicht einen Stride von 2 aufweist und die folgenden drei Schichten einen Stride von 1 aufweisen. Auf den zweiten Layer L2 folgt ein dritter Layer L3 mit einer ersten gefalteten Schicht mit einem Kernel von $3 \times 3$, 256 Filtern und einem Stride von 2, daran anschließend drei identische gefaltete Schichten mit einem Kernel von $3 \times 3$ und 256 Filtern.

Auf den dritten Layer L3 folgt ein vierter Layer L4 mit einer ersten gefalteten Schicht mit einem Kernel $3 \times 3$ und 512 Filtern und einem Stride von 2 und drei aufeinanderfolgenden identischen gefalteten Schichten mit einem Kernel von $3 \times 3$ und 512 Filtern. Anschließend folgt ein Average Pooling Layer avg.p. Die REsNet-18 Struktur weist abschließend einen fully connected Layer 62 auf, auf den jedoch verzichtet werden kann. Jede der dargestellten Schichten weist zudem nach der gefalteten Schicht eine Batch-Normalisierung und eine ReLU-Funktion auf. Die ReLU-Funktion ist eine Gleichrichter-Funktion, bei der nur die positiven Werte der Merkmale der Merkmalskarte weitergegeben werden. Die negativen Werte werden auf den Wert Null gesetzt.

Zudem sind zwischen den Schichten noch Verbindungen 43 eingezeichnet, über die Werte in der Pfeilrichtung über mehrere Schichten weitergeleitet werden und auf die Werte der Merkmale der vorhergehenden Schicht addiert werden. Gestrichelt dargestellte Verbindungen 43 zeigen an, dass auf diese auch verzichtet werden kann.

In dem dargestellten Ausführungsbeispiel wird die erste Anomaliekarte 40 aufgrund der Unterschiede der Merkmale der Merkmalskarten am Ausgang der ersten Layer L1 des ersten und des zweiten neuronalen Netzes 21, 22 gebildet. Die zweite Anomaliekarte 41 wird aufgrund der Unterschiede der Merkmale der Merkmalskarten am Ausgang des zweiten Layers L2 des ersten und des zweiten trainierten neuronalen Netzes 21, 22 gebildet. Die dritte Anomaliekarte 42 wird aufgrund der Unterschiede der Merkmale der Merkmalskarten am Ausgang der des dritten Layers L3 des ersten und des zweiten trainierten neuronalen Netzes 21, 22 gebildet. Abhängig von der gewählten Ausführungsform können die erste, zweite und/oder dritte Anomaliekarte 40, 41, 42 auch nach anderen Schichten der ResNet-18-Architektur gebildet werden.

Die erste, die zweite und/oder die dritte Anomaliekarte 40, 41, 42 werden zu der Anomaliekarte 39 addiert. Die Anomaliekarte 39 wird von der Vergleichseinheit 18 verwendet, um durch einen Vergleich mit Referenzwerten einer Referenzkarte 61 zu entscheiden, ob das analysierte Bild 8 einen Innenraum eines öffentlichen Verkehrsmittels zeigt, der sich nicht in einem vorgegebenen Zustand befindet oder nicht.

Das erste und/oder das zweite trainierte neuronale Netz 21, 22 stellen beispielsweise Encoder eines trainierten Autoencoders dar. Der Autoencoder wurde beispielsweise mithilfe eines maskierten Trainingsverfahrens trainiert.

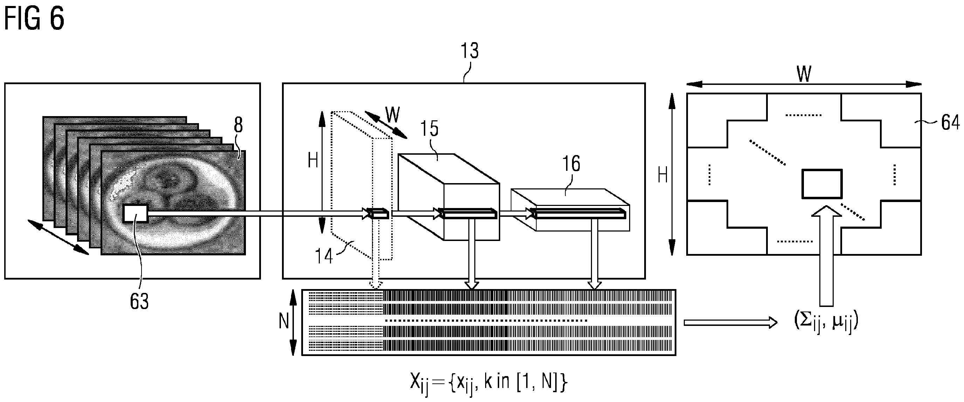

FIG 6 zeigt in einer schematischen Darstellung eine weitere Vorrichtung und ein weiteres Verfahren zum Erkennen eines vorgegebenen Zustandes eines Innenraums eines öffentlichen Verkehrsmittels.

Es ist ein trainiertes gefaltetes neuronales Netz 13 vorgesehen, das mehrere Schichten 14, 15, 16 aufweist. Das trainierte neuronale Netz 13 kann beispielsweise als Teil einer ResNet-18-Architektur ausgebildet sein. Zum Trainieren des neuronalen Netzes 13 werden eine Vielzahl von N Bildern 8 zum Trainieren des neuronalen Netzes 13 verwendet. Die N Bilder 8 stellen Innenräume des öffentlichen Verkehrsmittels dar, die sich in dem vorgegebenen Zustand befinden, bei dem beispielsweise kein weiteres Objekt außer der Inneneinrichtung des Innenraumes auf den Bildern zu sehen ist. Beim Trainieren des neuronalen Netzes 13 werden für jeden Bildbereich 63 entsprechend seiner Position (i, j) in dem zweidimensionalen Bild 8 mithilfe des PaDiM-Vefahrens (Patch Distribution Modeling Verfahren)

Gaußsche Parameter ($\mu_{ij}$, $E_{ij}$) aus den Sätzen der N trainierten eingebetteten Vektoren $X_{ij} = \{ x_{ij}^{k}, k \in [1, N] \}$ von N verschiedenen Trainingsbildern und drei verschiedenen vortrainierten versteckten Schichten des gefalteten neuronalen Netzes 13 berechnet.

Aus den einbetteten Vektoren $X_{ij}$ wird eine Matrix von Gauß-Parametern mithilfe von Parameterschätzung ermittelt. Dabei wird mithilfe des trainierten gefalteten neuronalen Netzes 13 eine Extraktion der eingebetteten Parameter durchgeführt, wobei für jeden Bildbereich 63 eine multivariante Gaußverteilung ermittelt wird, wobei Korrelationen zwischen verschiedenen semantischen Schichten des trainierten gefalteten neuronalen Netzes 13 berücksichtigt werden.

Vortrainierte gefaltete neuronale Netze 13 sind in der Lage, relevante Merkmale für die Erkennung eines Bildes eines Innenraumes, in dem sich zusätzlich zur Inneneinrichtung ein Objekt, wie ein Mensch, ein Tier oder ein anderer Gegenstand befindet (Anomalieerkennung) anzugeben. Daher wird vorzugsweise ein vortrainiertes gefaltetes neuronales Netz zur Erzeugung von eingebetteten Vektoren $X_{ij}$ verwendet. Während der Trainingsphase wird jeder Bereich der Bilder mit den räumlich entsprechenden Aktivierungsvektoren in den vortrainierten Aktivierungskarten der versteckten Schichten des gefalteten neuronalen Netzes verknüpft.

Die Aktivierungsvektoren aus verschiedenen Schichten werden dann miteinander verknüpft, um die eingebetteten Vektoren $X_{ij}$ zu erhalten, die Informationen aus verschiedenen semantischen Ebenen und Auflösungen tragen, um feinkörnige und globale Zusammenhänge zu kodieren. Da die Aktivierungskarten eine geringere Auflösung haben als das zugeführte Bild 8, haben viele Pixel die gleichen Einbettungen und bilden dann Bildbereiche 63 ohne Überlappung in der ursprünglichen Bildauflösung. Daher kann ein Bild in ein Raster von $(i,j) \in [1,W] \times [1,H]$ Positionen unterteilt werden, wobei $W \times H$ die Auflösung der größten Aktivierungskarte ist, die zur Erzeugung von Einbettungen verwendet wird. Schließlich wird jede Position (i,j) eines Bildbereiches in diesem Raster mit einem eingebetteten Vektor $x_{ij}$ verknüpft, der wie oben beschrieben berechnet wird.

Um die Merkmale der Bilder des Innenraumes, der sich in dem vorgegebenen Zustand befindet, an der Position $(i,j)$ zu erlernen, berechnen wir zunächst den Satz von Patch-Embedding-Vektoren an $(ij)$, $X_{ij} = \left\{ x_{ij}^k, k \in [\![1; N]\!] \right\}$ aus den N Trainingsbildern, wie in FIG 6 dargestellt. Um die in diesem Satz enthaltenen Informationen zusammenzufassen, nehmen wir an, dass $X_{ij}$ durch eine multivariate Gaußverteilung $\mathcal{N}(\mu_{ij}, \Sigma_{ij})$ erzeugt wird, wobei $\mu_{ij}$ der Stichprobenmittelwert von $X_{ij}$ ist und die Stichprobenkovarianz $\Sigma_{ij}$ wie folgt geschätzt wird:

$$\Sigma_{ij} = \frac{1}{N-1} \sum_{k=1}^{N} \left( x_{ij}^k - \mu_{ij} \right) \left( x_{ij}^k - \mu_{ij} \right)^{\mathrm{T}} + \epsilon I$$

wobei der Regularisierungsterm $\epsilon I$ die Stichproben-Kovarianzmatrix $\Sigma_{ij}$ vollwertig und invertierbar macht. Schließlich wird jede mögliche Patch-Position mit einer multivariaten Gauß-Verteilung assoziiert, wie in einer Matrix 64 der Gauß-Parameter dargestellt ist.

Die Patch-Embedding-Vektoren enthalten Informationen aus verschiedenen semantischen Ebenen. Daher erfasst jede geschätzte multivariate Gauß-Verteilung $\mathcal{N}(\mu_{ij}, \Sigma_{ij})$ auch Informationen aus verschiedenen Ebenen, und $\Sigma_{ij}$ enthält die Zwischen-Ebene-Korrelationen.

Beispielsweise kann die Mahalanobis-Distanz $M(x_{ij})$ verwendet werden, um den Bereich an der Position $(i,j)$ eines Testbildes als Anomalie zu bewerten. $M(x_{ij})$, kann als der Abstand zwischen der Einbettung des Test-Bereichs $x_{ij}$ und der gelernten Verteilung $\mathcal{N}(\mu_{ij}, \Sigma_{ij})$ interpretiert werden, wobei $M(x_{ij})$, wie folgt berechnet wird:

$$M(x_{ij}) = \sqrt{\left( x_{ij} - \mu_{ij} \right)^T \Sigma_{ij}^{-1} \left( x_{ij} - \mu_{ij} \right)}$$

So kann die Matrix der Mahalanobis-Distanzen $M = (M(x_{ij}))_{1<i<W, 1<j<H}$, die eine Anomaliekarte bildet, berechnet werden. Hohe Punktzahlen in dieser Karte weisen auf anomale Gebiete hin. Der endgültige Anomalie-Score des gesamten Bildes ist das Maximum der Anomaliekarte.

Zur Bewertung der Lokalisierungsleistung können zwei schwellenunabhängige Metriken verwendet werden. Wir verwenden die Area Under the Receiver Operating Characteristic Curve (AUROC), wobei die Richtig-Positiv-Rate der Prozentsatz der Pixel ist, die korrekt als anomal klassifiziert wurden. Da die AUROC zugunsten großer Anomalien verzerrt ist, verwenden wir auch den PRO-Score (per-region-overlap score). Er besteht darin, für jede zusammenhängende Komponente eine Kurve der Mittelwerte der korrekt klassifizierten Pixelraten als Funktion der Falsch-Positiv-Rate zwischen 0 und 0,3 zu zeichnen. Der PRO-Score ist das normalisierte Integral dieser Kurve. Ein hoher PRO-Score bedeutet, dass sowohl große als auch kleine Anomalien gut lokalisiert sind.

Das neuronale Netz 13 kann z.B. als ResNet18 (R18), Wide ResNet-50-2 (WR50) und einem EfficientNet-B5 ausgebildet sein, die auf der Bilddatenbank ImageNet vortrainiert wurden. Dabei werden Patch Embedding Vektoren aus den ersten drei Schichten extrahiert, um Informationen aus verschiedenen semantischen Ebenen zu kombinieren und gleichzeitig eine ausreichend hohe Auflösung für die Lokalisierungsaufgabe zu erhalten. Dieser Idee folgend, extrahieren wir Patch-Embedding-Vektoren aus den Schichten 7 (Ebene 2), 20 (Ebene 4) und 26 (Ebene 5), wenn ein EfficientNet-B5 verwendet wird. PaDiM-R18-Rd100 ist zum Beispiel ein PaDiM-Modell mit einem ResNet-18-Backbone und 100 zufällig ausgewählten Dimensionen für die Patch-Einbettungsvektoren.

Das Training wird beispielsweise während 100 Epochen mit dem Adam Optimizer mit einer anfänglichen Lernrate von $10^{-4}$ und einer Stapelgröße von 32 Bildern durchgeführt. Die Anomaliekarte für die Lokalisierung kann dem pixelweisen L2-Fehler für die Rekonstruktion entsprechen.

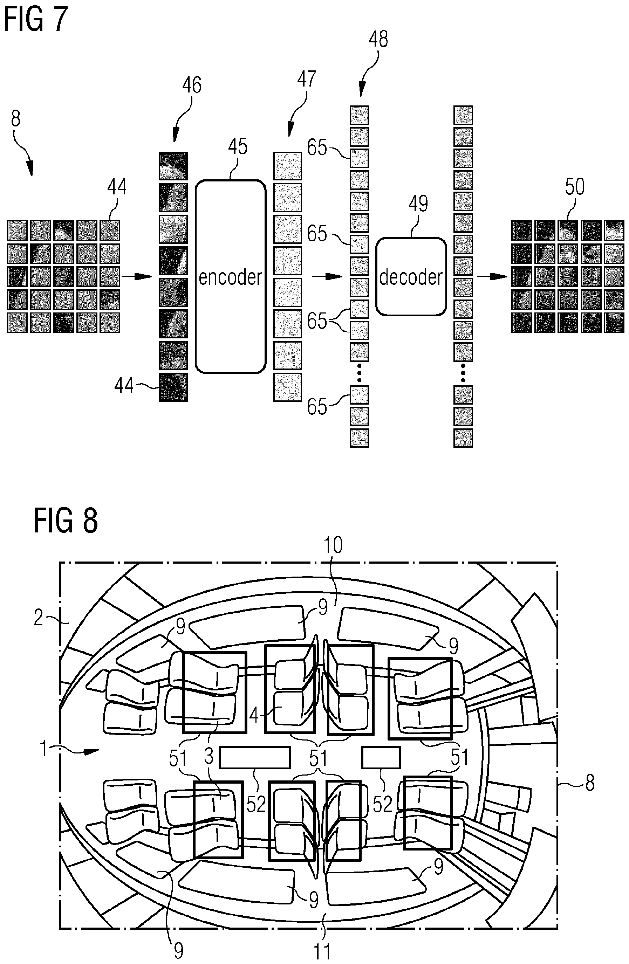

FIG 7 zeigt in einer schematischen Darstellung ein Verfahren zum Trainieren eines maskierten Autoencoders mit einem Encoder 45 und einem Decoder 49. Dabei wird von einem Bild 8, das in eine Vielzahl von Bildausschnitten 44 unterteilt ist, nur ein Teil der Bildausschnitte 44, d.h. eine vorgegebene Auswahl 46 von Bildausschnitten 44 dem Encoder 45 für ein Trainingsverfahren zugeführt. Die maskierten Bildausschnitte sind die Bildausschnitte des Bildes 8, die nicht an den Encoder 45 weitergegeben werden.

Der Encoder 45 ist z.B. als gefaltetes neuronales Netz mit mehreren versteckten Schichten ausgebildet und ermittelt die vorgegebene Anzahl von Bildausschnitten in einer versteckten Schicht 47. Anschließend werden die Bildausschnitte der versteckten Schicht 47 auf die Anzahl der ursprünglichen Bildausschnitte 44 des gesamten Bildes 8 mit leeren Bildausschnitten 65 auf die ursprüngliche Anzahl der Bildausschnitte 44 des Bildes 8 ergänzt. Dabei wird die Reihenfolge der maskierten Bildausschnitte berücksichtigt.

Die ergänzte, versteckte Schicht 48 wird einem Decoder 49 zugeführt. Der Decoder 49 und der Encoder 45 können als gefaltetes neuronales Netzwerk, insbesondere als ResNet-18-Architektur, ausgebildet sein. Der Decoder 49 ermittelt anhand der ergänzten, versteckten Schicht 48 ein Ausgangsbild 50. Durch einen Vergleich des Ausgangsbildes 50 mit dem Bild 8 werden der Encoder 45 und der Decoder 49 in der Weise trainiert, dass das Ausgangsbild 50 möglichst gut dem Bild 8 entspricht. Entsprechende Verfahren sind beispielsweise auch von Kaiming He et al., Masked Autoencoders Are Scalable Vision Learners, Facebook AI Research bekannt.

Versuche haben gezeigt, dass es für die Aufgabe, zu erkennen, ob sich ein Objekt im Innenraum eines öffentlichen Verkehrsmittels befindet, das nicht zur Innenausstattung des Innenraums des öffentlichen Verkehrsmittels gehört, vorteilhaft ist, beim Trainieren des Encoders 45 bei dem Bild 8 bestimmte Bereiche des Innenraumes zu maskieren. Die beim Trainieren des Encoders zu maskierten Bereiche des Innenraumes sind z.B. die Sitze des Innenraumes und/oder vorgegebene Bereiche des Innenraumes, die über Fenster des öffentlichen Verkehrsmittels mit stark wechselnder natürlicher Lichtstrahlung belichtet werden. Die Bereiche mit stark wechselnder natürlicher Lichtstrahlung werden mithilfe von Versuchen bestimmt. Ein Bereich mit stark wechselnder natürlicher Belichtung wird dann erkannt, wenn sich die natürliche Lichtstrahlung beim Betrieb des öffentlichen Verkehrsmittels um mehr als das Doppelte verändern kann. Durch das Maskieren der vorgegebenen Bereiche wird die Robustheit des trainierten Encoders 45 verbessert.

FIG 8 zeigt in einer schematischen Darstellung ein von der Kamera aufgenommenes Bild 8, das mehrere Sitze 3, 4 und mehrere Seitenfenster 9 zeigt. Es hat sich als vorteilhaft erwiesen, erste Bereiche 51 der Sitze beim Trainieren des Autoencoders und damit des Encoders zu maskieren. Die ersten Bereiche 51 sind schematisch in Form von rechteckig umrandeten Flächen eingezeichnet. Weiterhin sind in FIG 8 am Boden des Innenraumes 1 zweite Bereiche 52 eingezeichnet, die aufgrund der Anordnung der Fenster 9 abhängig vom Sonnenstand starken Helligkeitsschwankungen unterliegen. Auch die zweiten Bereiche 52 werden vorteilhaft beim maskierten Trainieren des Autoencoders und damit des Encoders maskiert.

Die zweiten Bereiche 52 werden mithilfe von Testverfahren ermittelt, bei denen die Helligkeitsunterschiede im Innenraum für einen sonnigen Tag und der künstlichen Beleuchtung in der Nacht erfasst werden. Liegen die Helligkeitsunterschiede in einem Bereich des Bildes zwischen Tag und Nacht über einem vorgegebenen Wert, so werden diese Bereiche des Bildes als zu maskierende Bereiche 52 festgelegt und beim Trainieren des Autoencoders beim Übergang vom Eingangsbild 8 zu der Auswahl der Bildausschnitte 46 maskiert. Dadurch kann die Anordnung und/oder die Größe der Fenster 9 für das Verfahren berücksichtigt werden.

Mithilfe der beschriebenen Vorrichtung und des beschriebenen Verfahrens ist es für eine Bedienperson, insbesondere ein Betriebspersonal, möglich, sich auf ein automatisches Verfahren zu verlassen, um zu entscheiden, ob die Innenräume des öffentlichen Verkehrsmittels leer sind oder nicht. Dabei wird mit dem beschriebenen Verfahren und der beschriebenen Vorrichtung vorzugsweise auch direkte Sonneneinstrahlung aus unterschiedlichen Richtungen in den Innenraum zu keinen falschen Ergebnissen führen. Zudem werden sich im öffentlichen Verkehrsmittel befindende Personen nicht übersehen, selbst wenn sie unauffällige Kleidung tragen und die Personen teilweise von der Inneneinrichtung verdeckt werden. Durch die Verwendung eines Merkmalsraumes nicht nur in zwei, sondern auch über zwei Dimensionen einer Merkmalskarte auch über mehrere Merkmalskarten hinweg, wird eine verbesserte Invarianz gegen unterschiedliche Lichtverhältnisse erreicht und die Robustheit gegen Fehlentscheidungen erhöht. Dies ist insbesondere von Vorteil bei der Verwendung von Merkmalspyramiden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Wie hierin verwendet, entspricht ein Computer z.B. einem Prozessor oder einem beliebigen elektronischen Gerät, das über Hardwareschaltungen, Software und/oder Firmware zur Verarbeitung von Daten konfiguriert ist. Beispielsweise können die hier beschriebenen Prozessoren einem oder mehreren (oder einer Kombination) eines Mikroprozessors, einer CPU oder einer anderen integrierten Schaltung (IC) oder einer anderen Art von Schaltung entsprechen, die in der Lage ist, Daten in einem Datenverarbeitungssystem zu verarbeiten.

Der Speicher des Computers kann einem internen oder externen flüchtigen Speicher (z.B. Hauptspeicher, CPU-Cache und/oder RAM) entsprechen, der in dem Computer enthalten ist und/oder in operativer Verbindung mit dem Computer steht. Ein solcher Speicher kann auch einem nichtflüchtigen Speicher entsprechen (z.B. Flash-Speicher, SSD, Festplatte oder ein anderes Speichergerät oder nichttransitorisches computerlesbares Medium), der in operativer Verbindung mit dem Computer steht. Der beschriebene Computer kann mindestens ein Eingabegerät und mindestens ein Anzeige- oder Ausgabegerät in operativer Verbindung mit dem Computer umfassen. Die Eingabevorrichtung kann beispielsweise eine Maus, eine Tastatur, einen Touchscreen, eine Gesteneingabevorrichtung oder eine andere Art von Eingabevorrichtung umfassen, die in der Lage ist, Benutzereingaben für den Computer bereitzustellen. Die Anzeigevorrichtung kann beispielsweise einen LCD- oder AMOLED-Bildschirm, einen Monitor, ein am Kopf getragenes Display oder jede andere Art von Anzeigevorrichtung oder Ausgabevorrichtung umfassen, die in der Lage ist, Ausgaben des Computers anzuzeigen. Beispielsweise können der Computer, der Speicher, die Softwareanweisungen, die Eingabevorrichtung und die Anzeigevorrichtung als Teil eines Datenverarbeitungssystems enthalten sein, das einem PC, einer Workstation, einem Server, einem Notebook, einem Tablet, einem Mobiltelefon, einer kopfgetragenen Anzeige oder einer anderen Art von Computersystem oder einer beliebigen Kombination davon entspricht. Der Computer kann auch einen oder mehrere Datenspeicher enthalten. Der Computer kann so konfiguriert sein, dass er Daten und/oder andere hierin beschriebene Informationen aus/in dem Datenspeicher verwaltet, abruft, erzeugt, verwendet, überarbeitet und speichert. Beispiele für einen Datenspeicher können eine Datei und/oder einen Datensatz umfassen, der in einer Datenbank (z. B. Oracle, Microsoft SQL Server), einem Dateisystem, einer Festplatte, einer SSD, einem Flash-Laufwerk, einer Speicherkarte und/oder einer anderen Art von Gerät oder System gespeichert ist, das nichtflüchtige Daten speichert. Es ist anzumerken, dass die Offenbarung zwar eine Beschreibung im Zusammenhang mit einem voll funktionsfähigen Computer und/oder einer Reihe von Handlungen enthält, dass aber Fachleute verstehen werden, dass zumindest Teile des Mechanismus der vorliegenden Offenbarung und/oder der beschriebenen Handlungen in Form von ausführbaren Computer-/Prozessoranweisungen (z. B, die beschriebenen Software-Befehle und/oder die entsprechenden Firmware-Befehle), die in einem nicht-transitorischen maschinenverwendbaren, computerverwendbaren oder computerlesbaren Medium in einer beliebigen Form enthalten sind, verteilt werden können, und dass die vorliegende Offenbarung gleichermaßen gilt, unabhängig von der besonderen Art des Befehls- oder Datenträgermediums oder Speichermediums, das zur tatsächlichen Durchführung der Verteilung verwendet wird. Beispiele für nicht-transitorische maschinenlesbare oder computerlesbare Medien sind: ROMs, EPROMs, Magnetbänder, Festplattenlaufwerke, SSDs, Flash-Speicher, CDs, DVDs und Blu-ray-Disks. Die vom Computer/Prozessor ausführbaren Anweisungen können eine Routine, eine Unterroutine, Programme, Anwendungen, Module, Bibliotheken und/oder Ähnliches umfassen. Ferner ist zu beachten, dass die ausführbaren Computer-/Prozessoranweisungen Quellcode, Bytecode, Laufzeitcode, Maschinencode, Assemblersprache, Java, JavaScript, Python, C, C#, C++ oder einer anderen Form von Code entsprechen und/oder daraus erzeugt werden können, der so programmiert/konfiguriert werden kann, dass er mindestens einen Prozessor veranlasst, die hierin beschriebenen Handlungen und Merkmale auszuführen. Der Klassifikator oder die neuronalen Netze oder neuronalen Netzwerke können in einem Rahmenwerk für maschinelles Lernen implementiert und eingesetzt werden, z. B. TensorFlow-Framework, Microsoft Cognitive Toolkit-Framework Rahmenwerk, Apache Singa Rahmenwerk oder Apache MXNet Rahmenwerk.

**Patentansprüche**

1. Computerimplementiertes Verfahren zum Erkennen eines Innenraumes eines öffentlichen Verkehrsmittels, der sich nicht in einem vorgegebenen Zustand befindet, wobei ein trainiertes neuronales Netz mit mehreren Schichten vorgesehen ist, wobei eine Schicht eine Merkmalskarte darstellt, wobei von einem aufgenommenen Bild des Innenraumes des öffentlichen Verkehrsmittels mithilfe der Schichten des trainierten neuronalen Netzes mehrere Merkmalskarten für das Bild erstellt werden, wobei eine Merkmalskarte Merkmale für Bildausschnitte des Bildes mit wenigstens einem oder mehreren Bildpixeln aufweist, wobei die Merkmale von wenigstens zwei Merkmalskarten mit Vergleichswerten verglichen werden, wobei bei einer vorgegebenen Abweichung der Merkmale von den Vergleichswerten erkannt wird, dass sich der Innenraum nicht in dem vorgegebenen Zustand befindet, und wobei bei Erkennen, dass sich der Innenraum nicht in dem vorgegebenen Zustand befindet, ein Signal ausgegeben oder abgespeichert wird.

2. Verfahren nach Anspruch 1, wobei ein weiteres trainiertes neuronales Netz mit mehreren Schichten vorgesehen ist, wobei die Schichten des weiteren trainierten neuronalen Netzes weitere Merkmalskarten des Bildes bereitstellen, wobei die Merkmale der weiteren Merkmalskarten des weiteren trainierten neuronalen Netzes die Vergleichswerte darstellen.

3. Verfahren nach Anspruch 2, wobei das neuronale Netz und das weitere neuronale Netz mit unterschiedlichen Bildern und/oder mit unterschiedlicher Anzahl von Bildern und/oder mit unterschiedlichen Verfahren trainiert wurden.

4. Verfahren nach Anspruch 1, wobei das neuronale Netz in der Weise trainiert wurde, dass die Schichten des neuronalen Netzes eine Merkmalskarte für Bildausschnitte des Bildes darstellen, wobei die Merkmalskarte für die Bildausschnitte multivariante Gaußverteilungen aufweisen,
wobei von dem aufgenommenen Bild des Innenraumes des öffentlichen Verkehrsmittels mithilfe der Schichten des trainierten neuronalen Netzes mehrere Merkmalskarten mit multivarianten Gaußverteilungen für die Bildausschnitte des Bildes aufweisen, wobei die Gaußverteilungen der Bildausschnitte mehrerer Merkmalskarten mit Vergleichswerten verglichen werden, wobei bei einer vorgegebenen Abweichung der Gaußverteilungen von den Vergleichswerten erkannt wird, dass sich der Innenraum nicht in dem vorgegebenen Zustand befindet.

5. Verfahren nach Anspruch 4, wobei die Vergleichswerte mithilfe des trainierten neuronalen Netzes während eines Trainingsverfahrens mit einer Vielzahl von Testbildern erzeugt wurden, wobei die Vergleichswerte Mittelwerte der multivarianten Gaußverteilungen darstellen, die während des Trainingsverfahrens ermittelt wurden.

6. Verfahren nach einem der vorhergehenden Ansprüche, wobei das neuronale Netz in Form eines Encoders eines trainierten Autoencoders ausgebildet ist.

7. Verfahren nach Anspruch 6, wobei der trainierte Encoder als Teil eines trainierten Autoencoders mithilfe eines maskierten Trainingsverfahrens trainiert wurde.

8. Verfahren nach Anspruch 7, wobei beim Trainieren des Autoencoders vorgegebene Bereiche des Innenraumes maskiert werden, wobei insbesondere Sitze des Innenraumes und/oder vorgegebene Bereiche des Innenraumes, die über Fenster des öffentlichen Verkehrsmittels mit natürlicher Lichtstrahlung belichtet werden, maskiert werden.

9. Verfahren nach einem der vorhergehenden Ansprüche, wobei das neuronale Netz wenigstens einen Teil eines ResNets aufweist, insbesondere als ResNet ausgebildet ist.

10. Vorrichtung zum Erkennen eines Innenraumes eines öffentlichen Verkehrsmittels, der sich nicht in einem vorgegebenen Zustand befindet, mit einem trainierten neuronalen Netz, wobei das trainierte neuronale Netz ausgebildet ist, ein aufgenommenes Bild des Innenraumes des öffentlichen Verkehrsmittels in der Weise zu verarbeiten, dass von dem Bild eine Merkmalskarte erstellt wird, und wobei die Vorrichtung ausgebildet ist, die Merkmale der Merkmalskarten mit Vergleichswerten zu verglichen, wobei bei einer vorgegebenen Abweichung der Merkmale der Merkmalskarten von den Vergleichswerten ein Innenraum erkannt wird, der sich nicht in dem vorgegebenen Zustand befindet, wobei bei Erkennen eines Innenraumes, der sich nicht in dem vorgegebenen Zustand befindet, von der Vorrichtung ein Signal ausgegeben oder abgespeichert wird.

11. Vorrichtung nach Anspruch 10, wobei das neuronale Netz in Form eines trainierten Encoders ausgebildet ist, wobei insbesondere der trainierte Encoder als Teil eines Autoencoders mithilfe eines maskierten Trainingsverfahrens trainiert wurde.

12. Vorrichtung nach einem der Ansprüche 10 oder 11, wobei das neuronale Netz wenigstens einen Teil eines ResNets aufweist, insbesondere als ResNet ausgebildet ist.

13. Verfahren zum Trainieren eines Autoencoders mit einem Encoder und einem Decoder, wobei der Autoencoder in Form eines neuronalen Netzes ausgebildet ist, wobei beim Trainieren des Autoencoders mithilfe von Bildern eines Innenraumes eines öffentlichen Verkehrsmittels vorgegebene Bereiche des Innenraumes maskiert werden, wobei insbesondere Sitze des Innenraumes öffentlichen Verkehrsmittels und/oder vorgegebene Bereiche des Innenraumes, die über Fenster des öffentlichen Verkehrsmittels mit natürlicher Lichtstrahlung belichtet werden, maskiert werden, und wobei der Autoencoder mit den maskierten Bildern trainiert wird, und wobei der trainierte Encoder zum Erkennen eines Innenraumes des öffentlichen Verkehrsmittels verwendet wird, der sich nicht in einem vorgegebenen Zustand befindet.

14. Verfahren nach einem der Ansprüche 1 bis 9 und 13, wobei der nicht vorgegebene Zustand darin besteht, dass sich ein Objekt in dem Innenraum befindet, dass nicht Teil der Einrichtung des Innenraumes ist, wobei das Objekt insbesondere ein Mensch, ein Tier, ein Fahrrad, eine Tasche oder ein sonstiger Gegenstand ist.

15. Computerprogrammprodukt mit Programmcodemitteln, die bei einem Ablauf auf einer Recheneinheit ausgebildet sind, ein Verfahren nach einem der Ansprüche 1 bis 9, 13 und 14 auszuführen.

# FIG 1

# FIG 2

FIG 3

FIG 4

FIG 5

13

62

20

18

61

19

62

avg. p 1*1

39

3x3 conv. 512
3x3 conv. 512
3x3 conv. 512
3x3 conv. 512 /2
L4   5*5   43

3x3 conv. 256
3x3 conv. 256
3x3 conv. 256
3x3 conv. 256 /2
L3   25*25   43

42

3x3 conv. 128
3x3 conv. 128
3x3 conv. 128
3x3 conv. 128 /2
L2   50*50   43

41

3x3 conv. 64
3x3 conv. 64
3x3 conv. 64
3x3 conv. 64
L1   100*100   43

3x3 pool /2
7x7 conv. 64 /2
100*100
21   8

40

avg. p 1*1

3x3 conv. 512
3x3 conv. 512
3x3 conv. 512
3x3 conv. 512 /2
L4   5*5   43

3x3 conv. 256
3x3 conv. 256
3x3 conv. 256
3x3 conv. 256 /2
L3   25*25   43

3x3 conv. 128
3x3 conv. 128
3x3 conv. 128
3x3 conv. 128 /2
L2   50*50   43

3x3 conv. 64
3x3 conv. 64
3x3 conv. 64
3x3 conv. 64
L1   100*100   43

3x3 pool /2
7x7 conv. 64 /2
100*100
22   8

FIG 6

$$X_{ij} = \{x_{ij}, k \text{ in } [1, N]\}$$

$(\Sigma_{ij}, \mu_{ij})$

EP 4 435 638 A1

FIG 7

FIG 8

Europäisches
Patentamt

European
Patent Office

Office européen
des brevets

# EUROPÄISCHER RECHERCHENBERICHT

Nummer der Anmeldung

EP 24 15 4901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | OKAN K\"OP\"UKL\"U ET AL: "Driver Anomaly Detection: A Dataset and Contrastive Learning Approach", ARXIV.ORG, CORNELL UNIVERSITY LIBRARY, 201 OLIN LIBRARY CORNELL UNIVERSITY ITHACA, NY 14853, 30. September 2020 (2020-09-30), XP081774624, * Seiten 1-8 * | 1-15 | INV. G06F18/22 G06V10/82 G06V20/59 |
| A | DEFARD THOMAS ET AL: "PaDiM: A Patch Distribution Modeling Framework for Anomaly Detection and Localization", 5. März 2021 (2021-03-05), SPRINGER, PAGE(S) 475 - 489, XP047578488, * Abbildung 2 * | 1-15 | |
| A | US 2020/103354 A1 (ANGERMAYER JÖRG [DE] ET AL) 2. April 2020 (2020-04-02) * das ganze Dokument * | 1-15 | |
| A | Anonymous: "tensorflow - Deep neural network skip connection implemented as summation vs concatenation? - Stack Overflow", , 8. März 2018 (2018-03-08), XP093167887, Gefunden im Internet: URL:https://stackoverflow.com/questions/49 164230/deep-neural-network-skip-connection -implemented-as-summation-vs-concatenation [gefunden am 2024-05-28] * das ganze Dokument * | 1-15 | RECHERCHIERTE SACHGEBIETE (IPC) G06F G06V |

-/--

Der vorliegende Recherchenbericht wurde für alle Patentansprüche erstellt

| Recherchenort | Abschlußdatum der Recherche | Prüfer |
|---|---|---|
| Den Haag | 28. Mai 2024 | Mariggis, Ioannis |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 24 15 4901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | Anonymous: "Detect Image Anomalies Using Pretrained ResNet-18 Feature Embeddings - MATLAB & Simulink - MathWorks Benelux", , 28. Mai 2024 (2024-05-28), XP093167886, Gefunden im Internet: URL:https://nl.mathworks.com/help/images/detect-image-anomalies-using-pretrained-resnet-18-feature-embeddings.html#mw_rtc_DetectImageAnomaliesUsingFeatureEmbeddingsExample_M_02538722 [gefunden am 2024-05-28] * das ganze Dokument * ----- | 1-15 | |
| A | ZAVRTANIK VITJAN ET AL: "Reconstruction by inpainting for visual anomaly detection", PATTERN RECOGNITION, ELSEVIER, GB, Bd. 112, 17. Oktober 2020 (2020-10-17), XP086473116, ISSN: 0031-3203, DOI: 10.1016/J.PATCOG.2020.107706 [gefunden am 2020-10-17] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 28. Mai 2024 | Mariggis, Ioannis |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
    Dokument

EPO FORM 1503 03.82 (P04C03)

Seite 2 von 2

**EP 4 435 638 A1**

## ANHANG ZUM EUROPÄISCHEN RECHERCHENBERICHT
## ÜBER DIE EUROPÄISCHE PATENTANMELDUNG NR.

EP 24 15 4901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| US 2020103354 A1 | 02-04-2020 | CN 111055767 A | 24-04-2020 |
| | | DE 102018216761 A1 | 02-04-2020 |
| | | EP 3629305 A1 | 01-04-2020 |
| | | US 2020103354 A1 | 02-04-2020 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KAIMING HE et al.** Masked Autoencoders Are Scalable Vision Learners. *Facebook AI Research*